(19) Europäisches Patentamt
European Patent Office
Office européen des brevets

(11) **EP 4 257 415 B1**

(12) **EUROPEAN PATENT SPECIFICATION**

(45) Date of publication and mention
of the grant of the patent:
**20.05.2026 Bulletin 2026/21**

(21) Application number: **22167311.4**

(22) Date of filing: **08.04.2022**

(51) International Patent Classification (IPC):
***B60L 53/14*** *(2019.01)*      ***B60L 53/62*** *(2019.01)*
***B60L 58/12*** *(2019.01)*      ***B60L 58/15*** *(2019.01)*
***B60L 58/24*** *(2019.01)*

(52) Cooperative Patent Classification (CPC):
**B60L 53/62; B60L 53/14; B60L 58/12; B60L 58/15;
B60L 58/24;** Y02T 10/70

(54) **CONTROL DEVICE AND METHOD FOR CONTROLLING CHARGING OF AN ENERGY STORAGE
DEVICE**

STEUERVORRICHTUNG UND VERFAHREN ZUR STEUERUNG DES LADEVORGANGS EINER
ENERGIESPEICHERVORRICHTUNG

DISPOSITIF ET PROCÉDÉ DE COMMANDE POUR COMMANDER LA CHARGE D'UN DISPOSITIF
DE STOCKAGE D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.10.2023 Bulletin 2023/41**

(73) Proprietor: **Scania CV AB
151 87 Södertälje (SE)**

(72) Inventor: **ANDERSSON, Hampus
151 44 Södertälje (SE)**

(74) Representative: **Scania CV AB
Patents, GP 117kv
151 87 Södertälje (SE)**

(56) References cited:
**AU-A1- 2021 201 900     JP-B2- 3 450 906
US-A1- 2015 326 037     US-A1- 2021 111 446
US-A1- 2021 206 291**

• **LAMPRECHT ALEXANDER ET AL: "Enhancing
Battery Pack Capacity Utilization in Electric
Vehicle Fleets via SoC-Preconditioning", 2019
22ND EUROMICRO CONFERENCE ON DIGITAL
SYSTEM DESIGN (DSD), IEEE, 28 August 2019
(2019-08-28), pages 359 - 364, XP033637575, DOI:
10.1109/DSD.2019.00059**

## EP 4 257 415 B1

**Description**

TECHNICAL FIELD

The present disclosure relates in general to a method for controlling charging of an energy storage device of a vehicle. Moreover, the present disclosure relates in general to a computer program and a computer-readable medium. The present disclosure further relates in general to a control device configured to control charging of an energy storage device of a vehicle. Furthermore, the present disclosure relates in general to a vehicle comprising the control device.

BACKGROUND

The strive to reduce emissions and improve fuel economy of heavy vehicles, such as trucks and buses, has led to the development of vehicles comprising propulsion systems that uses one or more electrical machines. These electrical machines are typically powered by energy storage devices that may require charging at designated charging stations. Examples of such vehicles include Plug-in Hybrid Electric Vehicles (PHEVs), and Battery Electric Vehicles (BEVs).

Energy storage devices for vehicles are generally built up from many electrochemical cells, sometimes also referred to as battery cells, to achieve desired capacity. The electrochemical cells can store or release energy through electrochemical reactions. An energy storage device used for powering a vehicle may comprise one or more battery packs. In case the energy storage device comprises a plurality of battery packs, these may be connected in series and/or in parallel. Each battery pack may typically comprise a plurality of battery modules connected in series and/or in parallel. A battery module typically comprises multiple electrochemical cells connected in series and/or parallel, the multiple electrochemical cells being partly or fully encased in a mechanical structure. Other configurations of energy storage devices are also possible, if desired. For example, it is also possible to arrange individual electrochemical cells in a battery pack, without the use of modules.

The service life of the energy storage devices, used for powering the electrical machine(s) of the vehicle, is an essential factor when considering the total life cost of the vehicle. Thus, there is a desire to reduce aging of such energy storage devices so as to prolong the service life thereof. There are many mechanisms that affect aging and thus the service life of an energy storage device of a vehicle. For example, the service life is affected by how the energy storage device is operated. In other words, the service life of an energy storage device is affected by e.g. how it is charged and discharged. For example, a low charging rate may in general lead to a reduced risk of aging of energy storage device compared to a high charging rate and thereby an increase in the service life of the energy storage device. However, a low charging rate also leads to an increase of the duration of the charging procedure to reach a desired state of charge, which may lead to longer times the vehicle is out of service. Therefore, this is often not an appropriate strategy for heavy vehicles where the time during which the vehicle is out of service may be very costly for the owner of the vehicle. Therefore, a balance between the charging rate and time the vehicle may be at standstill often has to be found.

Furthermore, a low charging rate may sometimes lead to an increased risk for aging of the energy storage device due to prolonging the time the energy storage device has a high state of charge. The time spent at high state of charge may cause other aging factors to occur within the energy storage device and is therefore an important contributor to aging of an energy storage device.

Another factor that affects the total cost of operation of a heavy vehicle is energy losses during charging of the energy storage device. There are two main sources of energy losses during charging of an energy storage device, namely resistive losses and so-called constant losses. Resistive losses occur due to losses in conductors of the electric system of the energy storage device. These resistivity losses are dependent of the charging current, where doubling the charging current means quadrupling the resistivity losses. So-called constant losses are losses that occur when the vehicle is "awake" and receiving charging current. The magnitude of these losses depend on many factors, including for example consumed energy by onboard computers and pumps (which may typically amount to about 1-4 kW for a heavy vehicle) and consumed energy for temperature control of the energy storage device (which may typically amount to about 0-10 kW for a heavy vehicle). Reducing these energy losses during charging would reduce the total cost of operation of a vehicle over the service life thereof.

US 2015/326037 A1 discloses a battery management system for a rechargeable battery including a battery monitor configured to acquire data regarding the rechargeable battery and a processor. The processor is configured to determine an initial state of charge of the battery based on the acquired data; determine a target state of charge for the battery; determine a plurality of charging solutions to achieve the target state of charge based on an optimization of one variable of the battery of a plurality of variables of the battery; narrow the plurality of charging solutions to charging solutions that meet an objective of each of the remaining plurality of variables of the battery; select the charging solution that corresponds with the fastest charge time for the battery from the charging solutions that meet the objective of each of the plurality of battery variables; and command a controller to regulate an amount of charge to the battery in accord with the selected charging solution.

US 2021/111446 A1 discloses a physics-based control of a battery system wherein a battery system is controlled based on a generated target temperature which is based on a physics-based model.

LAMPRECHT ALEXANDER et. al. "Enhancing battery pack utilization in electric vehicle fleets via SoC-preconditioning", 2019 22nd EUROMICRO CONFERENCE ON DIGITAL SYSTEM DESIGN (DSD), IEEE, 28 Augusti 2019 (2019-08-28), pages 359-364 disclose a method of using active cell balancing (ACB) hardware of the battery pack to precondition the SoC of cells such that all cells reach the top SoC threshold at the same time without requiring an additional balancing phase during charging.

SUMMARY

The object of the present invention is to provide a method for charging of an energy storage device of a vehicle which can reduce the total cost of operation of a vehicle over the service life of the vehicle.

The object is achieved by the subject-matter of the appended independent claims.

In accordance with the present disclosure, a method for controlling charging of an energy storage device of a vehicle is provided. The method is performed by a control device. The method comprises the following steps:

-    determining a desired duration of charging the energy storage device to a target state of charge so as to minimize energy loss in case the energy storage device is charged using a constant charging current during a charging operation,
-    when the determined desired duration of charging is equal to or longer than a predetermined minimum time threshold, determining a first charging current needed for reaching the target state of charge if charging for a period of time corresponding to the determined desired duration,
-    when the determined first charging current is equal to or below a predetermined maximum charging current limit, selecting the determined first charging current and the determined desired duration of charging as parameters for the charging operation of the energy storage device, and
-    charging the energy storage device using the selected parameters for the charging operation.

By means of the present method, charging of the energy storage device is performed according to a strategy that significantly reduces the energy losses during charging and therefore reduces the costs for charging of the energy storage device. This in turn reduces the total cost of operation of the vehicle. Energy losses occurring during charging of an energy storage device of a vehicle are particularly pronounced in case the vehicle is a heavy vehicle since such a vehicle generally also consumes energy during charging, for example for powering onboard computers and pumps as well as conditioning of the energy storage device and/or the interior of the vehicle. The present method is thus particularly suitable in case the vehicle is a heavy vehicle.

Moreover, the present method enables reducing the total cost of operation of the vehicle by reducing aging of the energy storage device and thereby prolonging the service life of the energy storage device. The reduced aging of the energy storage device is a result of the present method enabling a reduction of the time the energy storage device is maintained at a high state of charge, a factor which is a significant contributor to aging of an energy storage device.

More specifically, the present method provides a good balance between the two conflicting factors of energy losses increasing with increased charging current and increased aging due to average time spent at high state of charge, said average time increasing with reduced charging current.

The step of determining the desired duration of charging may be made under the assumption that the voltage of the energy storage device corresponds to the nominal voltage of the energy storage device irrespectively of the state of charging during the charging to be performed. This has the advantage of significantly reducing the computational efforts needed compared to a case where the actual voltage of the energy storage device during charging would be considered. Furthermore, predicting the actual voltage of the energy storage device, which may be dependent of the state of charge as well as the charging current used, would increase the number of uncertainty factors and therefore may increase the risk for errors. Thus, using the nominal voltage of the energy storage device may also reduce the risk for errors in determining the desired duration of charging and the associated first charging current to be used during charging.

The method may further comprise a step of determining a point in time at which charging needs to be initiated to reach the target state of charge at a preselected point in time based on the selected parameters for the charging operation, and initiating the step of charging the energy storage device using the selected parameters for the charging operation at the determined point in time. This has the advantage of further reducing aging of the energy storage device, and therefore prolongs the service life of the energy storage device. This in turn further improves the total cost of operation of the vehicle over the lifetime thereof.

The method may further comprise, when the determined desired duration is shorter than the predetermined minimum time threshold, determining a second charging current needed for reaching the target state of charge if charging for a period of time corresponding to the predetermined minimum time threshold. In such a case, the method further comprises, when the determined second charging current is equal to or below the predetermined maximum charging current limit, selecting the determined second charging current and the predetermined minimum time threshold as parameters for the charging operation of the energy storage device. Thereby, it is ensured that the duration of the charging procedure is sufficient to meet the predetermined minimum time threshold while still being performed in an energy efficient way.

The method may further comprise, when the determined first charging current is greater than the predetermined maximum charging current limit, determining a second duration of charging the energy storage device to the target state of charge so as to minimize energy loss in case the energy storage device is charged using a constant charging current corresponding to the predetermined maximum charging current limit, and selecting a charging current corresponding to the predetermined maximum charging current limit and the determined second duration of charging as parameters for the charging procedure of the energy storage device. Thereby, the risk of damaging the energy storage device and/or other constituent components of the vehicle due to using a too high charging current during charging is minimized while still achieving an energy efficient charging operation.

The step of determining a desired duration of charging the energy storage device so as to minimize energy loss comprises calculating the desired duration of charging according to the equation:

$$t_{opt} = \frac{\Delta SOC * C + E_{cond}}{U} * \sqrt{\frac{R}{P_{idle}}}$$

wherein

$t_{opt}$ represents the desired duration of charging of the energy storage device so as to minimize energy loss,

$\Delta SOC$ represents the difference in state of charge between target state of charge and a current state of charge of the energy storage device before charging,

$C$ represents the capacity of the energy storage device,

$E_{cond}$ represents estimated or predetermined total energy required for conditioning of the energy storage device and the interior of the vehicle,

$U$ represents nominal voltage of the energy storage device,

$R$ represents electrical resistance of the energy storage device measured at the charging port of the energy storage device, and

$P_{idle}$ represents estimated or predetermined constant energy losses during the charging operation.

The present disclosure further relates to a computer program comprising instructions which, when executed by a control device, cause the control device to carry out the method as described above.

The present disclosure further relates to a computer-readable medium comprising instructions which, when executed by a control device, cause the control device to carry out the method as described above.

Moreover, in accordance with the present disclosure, a control device configured to control charging of an energy storage device of a vehicle is provided. The control device is configured to determine a desired duration of charging the energy storage device to a target state of charge so as to minimize energy loss in case the energy storage device is charged using a constant charging current during a charging operation. The control device is further configured to, when the determined desired duration of charging is equal to or longer than a predetermined minimum time threshold, determine a first charging current needed for reaching the target state of charge if charging for a period of time corresponding to the determined desired duration. The control device is further configured to, when the determined first charging current is equal to or below a predetermined maximum charging current limit, select the determined first charging current and the determined desired duration of charging as parameters for the charging operation of the energy storage device. Moreover, the control device is configured to charge the energy storage device using the selected parameters for the charging operation.

The control device provides the same advantages as described above with reference to the corresponding method for controlling charging of an energy storage device of a vehicle.

The control device may further be configured to determine a time at which charging needs to be initiated to reach the target state of charge at a preselected point in time based on the selected parameters for the charging operation, and initiate the step of charging the energy storage device using the selected parameters at the determined time.

The control device may further be configured to, when the determined desired duration of charging is shorter than the predetermined minimum time threshold, determine a second charging current needed for reaching the target state of charge if charging for a period of time corresponding to the predetermined minimum time threshold. In such a case, the control device may further be configured to, when the determined second charging current is equal to or below the predetermined maximum charging current limit, select the determined second charging current and the predetermined minimum time threshold as parameters for the charging operation of the energy storage device.

The control device may further be configured to, when the determined first charging current is greater than the predetermined maximum charging current limit, determine a second duration of charging the energy storage device to the target state of charge so as to minimize energy loss in case the energy storage device is charged using a constant charging current corresponding to the predetermined maximum charging current limit, and select a charging current corresponding to the predetermined maximum charging current limit and the determined second duration of charging as parameters for the charging procedure of the energy storage device.

The control device is configured to determine the desired duration of charging the energy storage device so as to minimize energy loss according to the equation:

$$t_{opt} = \frac{\Delta SOC * C + E_{cond}}{U} * \sqrt{\frac{R}{P_{idle}}}$$

wherein

$t_{opt}$ represents the desired duration of charging of the energy storage device so as to minimize energy loss,
$\Delta SOC$ represents the difference in state of charge between target state of charge and a current state of charge of the energy storage device before charging,
$C$ represents the capacity of the energy storage device,
$E_{cond}$ represents estimated or predetermined total energy required for conditioning of the energy storage device and the interior of the vehicle,
$U$ represents nominal voltage of the energy storage device,
$R$ represents electrical resistance of the energy storage device measured at the charging port of the energy storage device, and
$P_{idle}$ represents estimated or predetermined constant energy losses during the charging operation.

The control device may further be configured to determine a difference in state of charge between the target state of charge and a current state of charge of the energy storage device before charging. The present disclosure further provides a vehicle comprising the control device described above. The vehicle may further comprise an energy storage device configured to power a propulsion unit of the vehicle. The vehicle may be a land-based heavy vehicle, such as a bus or a truck. Moreover, the vehicle may be a fully electrical vehicle or a hybrid vehicle.

BRIEF DESCRIPTION OF DRAWINGS

Hereafter "embodiment(s)" refer to embodiment(s) of the present disclosure.

Fig. 1   illustrates an example of a vehicle present at a charging station;

Fig. 2   schematically illustrates an example of an energy storage device;

Fig. 3   represents a flowchart schematically illustrating one exemplifying embodiment of the method for controlling charging of an energy storage device of a vehicle according to the present disclosure;

Fig. 4   represents a graph schematically illustrating state of charge of an energy storage device of a vehicle over time during charging from an initial state of charge to a target state of charge;

Fig. 5   schematically illustrates an exemplifying embodiment of a device which may comprise, consist of, or be comprised in a control device configured to control a charging operation of an energy storage device according to the present disclosure.

DETAILED DESCRIPTION

The invention will be described in more detail below with reference to exemplifying embodiments and the accompanying drawings. The invention is however not limited to the exemplifying embodiments discussed and/or shown in the drawings, but may be varied within the scope of the appended claims. Furthermore, the drawings shall not be considered drawn to scale as some features may be exaggerated in order to more clearly illustrate the invention or features thereof.

In accordance with the present disclosure, a method for controlling charging of an energy storage device of a vehicle is provided. Said charging is performed in a charging operation. The method comprises a step of determining a desired duration of charging the energy storage device to a target state of charge in order to minimize energy loss during the charging operation if charging of the energy storage device would be performed using a constant charging current during the charging operation. The determined desired duration of charging thus represents an optimized charging duration for the energy storage device with respect to energy efficiency under the condition that the energy storage device would be charged according to a constant charging current method.

The target state of charge may for example be a state of charge of the energy storage device predicted to be necessary (or desired) for the vehicle to safely reach a charging station where the vehicle can be charged once again. Alternatively, the target state of charge may be a state of charge at which the energy storage device is considered to be essentially fully charged. The target state of charge may alternatively be a predefined state of charge, such as 80%, 85% or 90%. The target state of charge may thus represent the state of charge of the energy storage device aimed for before the vehicle is to leave for example a charging station. Alternatively, the target state of charge may be a desired minimum state of charge to which the energy storage device should be charged in order to have sufficient back-up energy stored, for example if unforeseen driving assignments for the vehicle should arise.

The herein described method further comprises, in case the determined desired duration of charging is equal to or longer than a predetermined minimum time threshold, determining a first charging current needed for reaching the target state of charge in case the energy storage device would be charged for a period of time corresponding to the determined desired duration of charging the energy storage device. As mentioned above, said determined desired duration represents an optimized charging duration for the energy storage device with respect to energy efficiency.

The predetermined minimum time threshold mentioned above may correspond to a minimum time needed for performing one or more energy consuming actions other than charging of the energy storage device. In case of a plurality of energy consuming actions, the predetermined minimum time threshold corresponds to minimum time needed for the energy consuming action which requires the longest time. One example of such an energy consuming action is conditioning of the energy storage device before departure of the vehicle. Another example of such an energy consuming action is conditioning of the interior of the vehicle before departure. In other words, the predetermined minimum time threshold may correspond to the minimum time needed for conditioning of the energy storage device or the minimum time needed for conditioning of the interior of the vehicle, whichever is longer.

Conditioning of the energy storage device is here intended to mean controlling the temperature of the energy storage device, and may comprise heating and/or cooling depending on the circumstances. Conditioning of the energy storage device may for example be performed for the purpose of achieving a desired temperature of the energy storage device at departure of the vehicle so as ensure desired drivability (by reducing any potential power limitations in the powertrain of the vehicle) and/or to maximize the driving range of the vehicle. Conditioning of the energy storage device may also be performed for the purpose of ensuring a suitable temperature of the energy storage device during charging. For said reason, conditioning of the energy storage device may typically be initiated essentially at the same point in time as the charging operation is initiated, or even before the charging operation is initiated. Therefore, the minimum time for conditioning the energy storage device also inherently affects the possible minimum duration for charging the energy storage device.

Conditioning of the interior of the vehicle is here intended to mean climatizing at least a portion of the interior of the vehicle. One example of such a portion of the interior of the vehicle is a driver's cab. Climatizing of at least a portion of the interior of the vehicle may be performed for increasing the comfort of the driver and/or other persons intended to board the vehicle. The interior of the vehicle may suitably be climatized before departure of the vehicle as the energy required therefore may then be taken from the grid, rather from the energy storage device per se. This also contributes to increasing the potential maximum driving range of the vehicle, and therefore improves the total cost of operation of the vehicle. The minimum time for conditioning the interior of the vehicle in order to arrive at a desired result may be estimated in advance, or alternatively determined based on historical data. However, conditioning the interior of the vehicle longer than the minimum time needed therefore will lead to additional thermal losses. Therefore, conditioning of the interior of the vehicle may suitably be initiated at a calculated point in time such that the minimum time needed for conditioning the interior of the vehicle elapses as close as possible to the departure of the vehicle. This means that, in many situations, conditioning of the interior of the vehicle should suitably be initiated after the charging operation has been initiated.

The herein described method further comprises, when the determined first charging current is equal to or below a predetermined maximum charging current limit, selecting the determined first charging current and the determined desired duration of charging as parameters for the charging operation of the energy storage device.

The above mentioned predetermined maximum charging current limit may typically correspond to a predetermined maximum charging current defined for the energy storage device, for example to avoid risk for damage of the energy storage device by increased aging or other damaging mechanisms. The predetermined maximum charging current may be predefined, for example by a manufacturer of the energy storage device. The maximum charging current limit may be a fixed maximum charging current limit. It is however also possible that the maximum charging current limit is dependent of the temperature of the energy storage device during charging and/or the state of charge of the energy storage device. The predetermined maximum charging current limit may also correspond to a limit set to not risk causing damage to constituent components of the vehicle other than the energy storage device as such, such as constituent components of the electrical system of the vehicle. Alternatively, the predetermined maximum charging current limit may correspond to a maximum charging current deliverable by a charging system by which the energy storage device should be charged in situations where said deliverable charging current is less than the maximum charging current limit defined for the energy storage device.

The herein described method further comprises, when the charging parameters for the charging operation have been selected, charging the energy storage device using the selected parameters for the charging operation. Thus, the energy storage device is charged with a constant current for a duration set by the selected parameters. The charging of the energy storage device may be performed until the energy storage device has reached or is predicted to have reached the target state of charge, unless terminated in advance due to an intentional or unintentional interruption of the charging procedure. Such an interruption of the charging procedure may for example be initiated by a safety system in response to a detection of a suspected fault in the charging procedure or the energy storage device, or due to a loss of electrical connection to a grid during charging.

The above-described step of determining the desired duration of charging may suitably be performed using the assumption that the voltage of the energy storage device corresponds to the nominal voltage of the energy storage device irrespectively of the state of charge during the charging operation to be performed. Such an assumption greatly reduces the complexity in the calculations and therefore reduces the computational efforts needed. It is naturally also possible to use a predicted actual voltage of the energy storage device when determining the desired duration of charging, if desired. However, predicting the actual voltage of the energy storage device, which may be dependent of the state of charge as well as the charging current used, would increase the number of uncertainty factors and therefore may increase the risk for errors. Thus, using the nominal voltage of the energy storage device may also reduce the risk for errors in determining the desired duration of charging and the associated first charging current to be used during charging. Using the nominal voltage of the energy storage device when determining the desired duration of charging has been found to be accurate enough to be an acceptable assumption for the purpose of the present method.

According to an alternative, the above-described step of determining the desired duration of charging may be performed using a nominal voltage which is dependent of the state of charge of the energy storage device before charging and the target state of charge. Such a nominal voltage of the energy storage device may be determined based on historical data relating to the energy storage device. This would typically result in using a higher nominal voltage in case of charging in an upper portion of the state of charge window compared to a case of charging in a lower portion of the state of charge window in the step of determining the desired duration of the charging operation. This would increase the accuracy in the determination of the desired duration of charging compared to using the assumption that the voltage of the energy storage device corresponds to the nominal voltage of the energy storage device irrespectively of the state of charge during the charging operation to be performed.

There are many factors that may affect aging of an energy storage device. In addition to an increased risk for aging at a high charging rate, a prolonged time at a high state of charge may also increase aging of the energy storage device. It may therefore be desired to initiate the charging operation as late as possible before the charging operation needs to be terminated, for example due to departure of the vehicle from a charging station, to reduce the time the energy storage device has a high state of charge. The time at which the charging operation needs to be initiated is dependent of the duration of the charging operation, and thus by the selected parameters for the charging operation.

Therefore, the herein described method may further comprise a step of determining a point in time at which charging needs to be initiated for the energy storage device to reach the target state of charge at a preselected point in time based on the selected parameters for the charging operation. Said preselected point in time may correspond to the point in time at which the charging operation needs to be completed, e.g. due to a scheduled departure of the vehicle. The step of charging the energy storage device using the selected parameters may in such a case be initiated at the determined point in time.

As previously mentioned, one or more energy consuming actions other than the actual charging of the energy storage device may be performed simultaneously with the charging of the energy storage device. These actions may thus result in a predetermined minimum time threshold which sets a lower limit for the duration of the charging operation. Therefore, the method may further comprise, when the determined desired duration of charging is shorter that the predetermined minimum time threshold, determining a second charging current needed for reaching the target state of charge in case of charging for a period of time corresponding to the predetermined minimum time threshold. In other words, if the determined desired duration is shorter than the predetermined minimum time threshold, the duration of the upcoming charging operation is adjusted to the predetermined minimum time threshold to ensure that the one or more additional energy consuming actions, such as conditioning of the energy storage device and/or conditioning of the interior of the vehicle, may be completed during the charging operation. Adjusting the duration of the charging operation also means that the charging current to be used in the upcoming charging operation should be adjusted accordingly, which is the reason for determining the second charging current. In case the second charging current is equal to or below the predetermined maximum charging current, the determined second charging current and the predetermined minimum time threshold may be selected as parameters for the charging operation of the energy storage device. Thereafter, the method may comprise a step of charging the energy storage device according to said selected parameters.

In some situations, the determined first charging current may be greater than the predetermined maximum charging current limit. In such situations, charging of the energy storage device using the determined first charging current should be avoided in order to not risk damaging the energy storage device and/or other constituent components of the vehicle. Instead, the constant charging current to be used during the charging operation should be adjusted to a charging current corresponding to the predetermined maximum charging current limit. Since this results in a reduction of the charging current to be used, the duration of the charging operation also needs to be adjusted in order to reach the target state of charge. Therefore, the method may further comprise, when the determined first charging current is greater than the predetermined maximum charging current limit, determining a second (adjusted) duration of charging the energy storage device to the target state of charge so as to minimize energy loss. Said second duration of charging is determined based on the condition of the energy storage device being charged using a constant charging current corresponding to the predetermined maximum charging current limit. The parameters for the upcoming charging operation are then selected to be a charging current corresponding to the predetermined maximum charging current limit and the determined second duration of charging, and charging of the energy storage device is thereafter performed using said selected parameters.

In the following, theoretical considerations behind the herein described method will be described in more detail. For ease of explanation, the theoretical considerations below are based on using the nominal voltage of the energy storage device irrespectively of the state of charge of the energy storage device during the charging operation.

The energy loss, $E_{loss}$, during charging of an energy storage device may be described in accordance with Equation 1, wherein $t$ represents time, $P_{idle}$ represents constant power losses during active power transfer and $P_{res}$ represents resistive power losses during active power transfer during charging.

$$E_{loss} = t(P_{idle} + P_{res}) \qquad \text{Eq. 1}$$

The constant power loss $P_{idle}$ may be estimated or predetermined in accordance with previously known methods therefore. The resistive losses $P_{Res}$ may be expressed in accordance with Equation 2, wherein $I$ represents the charging current and R represents electrical resistance of the energy storage device as measured at the charging port of the energy storage device. (It may here be noted that the electrical resistance of the energy storage device as measure at the charging port of the energy storage device represents the total electrical resistance of the energy storage device including the resistance of for example by individual cells and any constituent components arranged between the cells and the charging port of the energy storage device, including e.g. connectors, bus bars and current interrupt devices.) Thus, Equation 1 may be rewritten according to Equation 3.

$$P_{res} = I^2 R \qquad \text{Eq. 2}$$

$$E_{loss} = t(P_{idle} + I^2 R) \qquad \text{Eq. 3}$$

Furthermore, the charging current $I$ may be expressed according to Equation 4. $\Delta SOC$ represents the difference in state of charge between the target state of charge and the state of charge at the initiation of the charging operation, and may be determined in accordance with any previously known method therefore. $C$ represents the capacity of the energy storage device, which is a known or estimated parameter. Preferably, $C$ represents the current capacity of the energy storage device. In other words, $C$ may represent the capacity having considered the current State-Of-Health (SOH) of the energy storge device. $E_{cond}$ represents the total energy required for one or more energy consuming actions, other than charging of the energy storage device, that may be performed during the charging operation of the energy storage device, e.g. conditioning of the energy storage device and/or the interior of the vehicle, and may be estimated or predetermined in accordance with previously known methods therefore. $t$ represents duration of charging and $U$ represents nominal voltage of the energy storage device, which is a known parameter.

$$I = \frac{\Delta SOC \cdot C + E_{cond}}{t \cdot U} \qquad \text{Eq. 4}$$

Combining Equations 3 and 4 means that the energy loss, $E_{loss}$, during charging of an energy storage device may be described in accordance with Equation 5.

$$E_{loss} = t \left( P_{idle} + \left( \frac{\Delta SOC \cdot C + E_{cond}}{t \cdot U} \right)^2 \cdot R \right) \qquad \text{Eq. 5}$$

The herein described method seeks to minimize the energy loss $E_{loss}$ during charging. Therefore, the extreme values of Equation 5, i.e. when $dE_{loss}/dt = 0$, may be considered as shown in Equation 6. This results in the possibility of expressing the time for charging according to Equation 7.

$$\frac{dE_{loss}}{dt} = P_{idle} - \frac{(\Delta SOC \cdot C + E_{cond})^2 \cdot R}{U^2 t^2} = 0 \leftrightarrow \qquad \text{Eq. 6}$$

$$t = \frac{\Delta SOC \cdot C + E_{cond}}{U} \cdot \sqrt{\frac{R}{P_{idle}}} \qquad \text{Eq. 7}$$

The sign of the second derivative of Equation 5 provides information of whether the time obtained in Equation 7 represents a global minimum or maximum of $E_{loss}$, as shown in Equation 8.

$$\frac{d^2 E_{loss}}{dt^2} = \frac{(\Delta SOC \cdot C)^2 \cdot R}{U^2 t^3} > 0 \text{ for } t \in \mathbb{R}, \ t > 0 \quad \text{Eq. 8}$$

Second degree derivative of $E_{loss}$ can only be positive as time is always positive. Therefore, $E_{loss}$ is always minimized when $t$ is calculated according to Equation 7.

In view of the above considerations, a desired duration $t_{opt}$ of charging the energy storage device so as to minimize energy loss may be calculated according to Equation 7, where $t_{opt} = t$.

When the desired duration $t_{opt}$ for charging has been determined, the charging current $I_{opt}$ needed to reach the target state of charge for $t_{opt}$ may be calculated using Equation 4 above, as demonstrated by Equation 9 below. $I_{opt}$ corresponds to the first charging current according to the present method as described above.

$$I_{opt} = \frac{\Delta SOC \cdot C + E_{cond}}{t_{opt} \cdot U} \qquad \text{Eq. 9}$$

Thus, based on the above considerations, it is clear that energy losses are minimized if charging the energy storage device with the constant current $I_{opt}$ for a duration $t_{opt}$. However, it should here be noted that this is only valid in case the determined desired duration $t_{opt}$ is longer than a minimum time threshold $t_{th}$ defined by the minimum time for performing the one or more energy consuming actions other than charging of the energy storage device.

Therefore, in case $t_{th} > t_{opt}$, the duration of charging of the energy storage device naturally needs to be set to the minimum time threshold, i.e. $t_{th}$. Thereafter, a second charging current $I_2$ by which the energy storage device should be charged in order to reach the target state of charge if the duration of the charging is $t_{th}$ is calculated using Equation 4, as shown in Eq. 10.

$$I_2 = \frac{\Delta SOC \cdot C + E_{cond}}{t_{th} \cdot U} \qquad \text{Eq. 10}$$

Moreover, in some cases it might be that $I_{opt}$ is greater than a predetermined maximum charging current limit, $I_{max}$, and that charging the energy storage device using $I_{opt}$ cannot be made. In such a case, the charging current may be set to the predetermined maximum charging current limit $I_{max}$ and a corresponding duration $t_{rev}$ of charging be calculated based thereon, as demonstrated by Equation 11.

$$t_{rev} = \frac{\Delta SOC \cdot C + E_{cond}}{I_{max} \cdot U} \qquad \text{Eq. 11}$$

Based on the above given considerations, the energy storage device may thus be charged during the charging procedure using selected parameters according to three different options, namely:

(I)

$$t_{opt}, I_{opt};$$

(II)

$$t_{th}, I_2; \text{ or}$$

(III)

$$t_{rev}, I_{max}.$$

All three options (I)-(III) result in energy efficient charging, gentle to the energy storage, device given the respective constraints. Option (I) is however naturally the most preferred option, if it is possible.

The performance of the herein described method for controlling charging of an energy storage device of a vehicle may be governed by programmed instructions. These programmed instructions typically take the form of a computer program which, when executed in or by a control device, cause the control device to effect desired forms of control action. Such instructions may typically be stored on a computer-readable medium.

The present disclosure further relates to a control device configured to control charging of an energy storage device in accordance with the method described above. The control device may be configured to perform any one of the steps of the method for controlling charging of an energy storage device as described herein. The control device is configured to control the charging of the energy storage device is accordance with selected parameters for the charging operation.

More specifically, in accordance with the present disclosure, a control device configured to control charging of an energy storage device of a vehicle is provided. The control device is configured to determine a desired duration of charging the energy storage device to a target state of charge so as to minimize energy loss. Said determination of a desired duration is performed based on the consideration that charging of the energy storage device would be charged using a constant current during the charging operation. The control device is further configured to, when the determined desired duration of charging is equal to of longer than a predetermined minimum time threshold, determine a first charging current needed to reach the target state of charge if charging for a period of time corresponding to the determined desired duration of charging of the energy storage device. The control device is furthermore configured to, when the determined first charging current is equal to or below a predetermined maximum charging current limit, select the determined first charging current and the determined desired duration of charging as parameters for the charging operation of the energy storage device. The control device is furthermore configured to charge the energy storage device using the selected parameters for the charging operation.

The control device may be configured to communicate with one or more other controllers and/or sensors of the vehicle or associated therewith for the purpose of obtaining data for the purpose of performing the herein described method. Alternatively, or additionally, the control device may be configured to determine data to be used for the purpose of performing the herein described method. For example, the control device may be configured to determine a difference is state of charge between the target state of charge and a current state of charge of the energy storage device before charging. As another example, the control device may be configured to estimate the total energy for required for conditioning of the energy storage device and the interior of the vehicle. The control device may further be configured to estimate constant energy losses during a charging operation.

The control device may comprise one or more control units. In case of the control device comprising a plurality of control units, each control unit may be configured to control a certain function or a certain function may be divided between more than one control units. The control device may be a control device of the energy storage device per se, or be separate from the energy storage device. For example, the control device may be incorporated in a battery management system of the energy storage device. The control device may be arranged in a vehicle comprising an energy storage device. Alternatively, parts of the control device may, if desired, be arranged remote from the vehicle. For example, one or more control units of the control device may be arranged at a remote control center and configured to communicate with one or more control units arranged on board the vehicle.

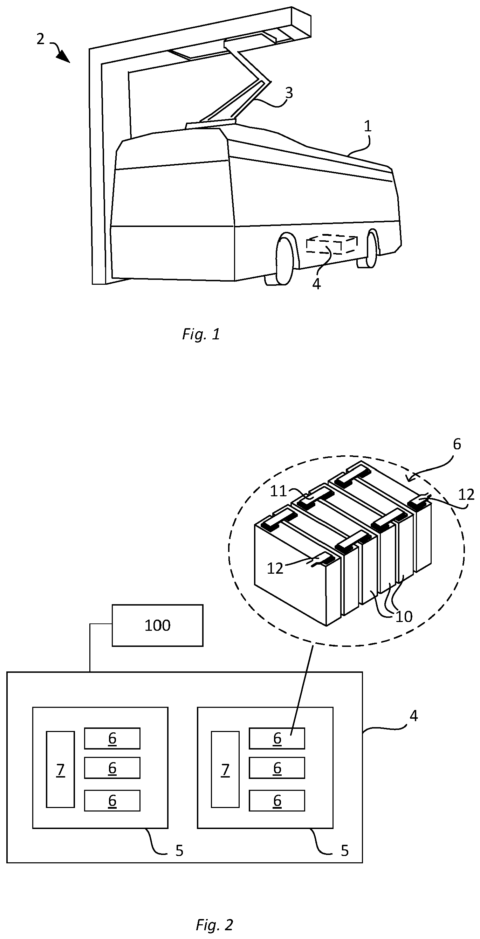

Figure 1 illustrates one example of a vehicle 1, here shown as a bus, present at a charging station 2. The vehicle comprises a current collector, here illustrated as being in the form of a pantograph 3, configured to allow the vehicle 1 to be connected to the charging station 2 for the purpose of charging an energy storage device 4 (schematically illustrated in the figure by dashed lines) onboard the vehicle 1.

Figure 2 schematically illustrates an example of an energy storage device 4, such as the energy storage device of the vehicle 1 shown in Figure 1. The energy storage device 4 may comprise one or more battery packs 5. In the figure, two battery packs are shown. It should however be recognized that the energy storage device 4 may consist of only one battery pack or comprise more than two battery packs 5. The battery packs 5 may be connected in series or in parallel to each other.

Each battery pack 5 may in turn comprise one or more battery modules 6, and at least one battery management system 7. The battery modules 6 may be connected in series and/or in parallel to each other within the battery pack. In case the energy storage device 4 comprises more than one battery pack 5, the battery management systems 7 of the different battery packs may be configured to communicate with each other.

Each battery module 6 may comprise a plurality of battery cells 10, as shown in the enlargement in the upper right portion of the figure. The battery cells 10 may be stacked in the module and fully or partly enclosed by a mechanical structure (not shown). The battery cells may be connected to each other by a busbar structure 11. In the figure, the battery cells 10 are shown to be connected in series. It is however also possible to connect the battery cells in parallel, if desired. The first and the last battery cells 10 in the battery module 6 may in turn be connected to terminals 12. The battery cells 10 may for example be lithium-ion battery cells or sodium-ion battery cells, but are not limited thereto.

Charging of the energy storage device may be controlled by a control device 100 configured therefore. The control device 100 may be a part of the energy storage device as such. For example, the control device 100 may be incorporated in the battery management system of the energy storage device. Alternatively, the control device 100 may be any other control device of the vehicle. Parts of the control device 100 may also be arranged remote from the vehicle, if desired. For example, parts of the control device 100 may be arranged at a charging station or at a remote control center. The control device 100 may comprise one or more control units. In case of the control device comprising a plurality of control units, each control unit may be configured to control a certain function or a certain function may be divided between more than one control units.

The herein described method may be used for controlling charging of the energy storage device 4 shown in figure 2. It should however be noted that energy storage devices of vehicles may have other configurations than the one illustrated in figure 2. The herein described method may be used for controlling charging of energy storage devices of other configurations as well.

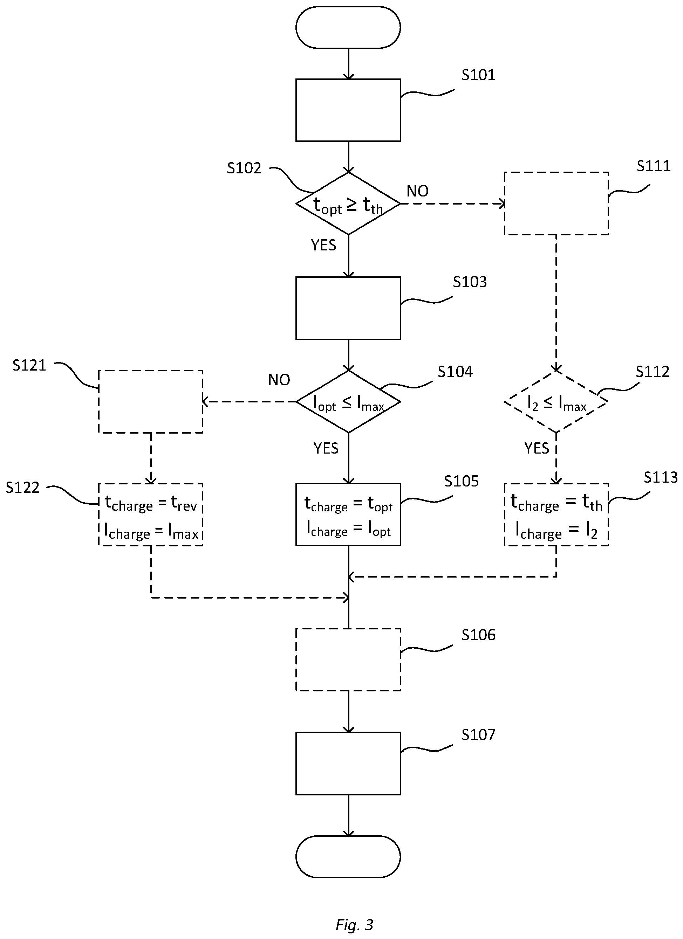

Figure 3 represents a flowchart schematically illustrating one exemplifying embodiment of the method for controlling charging of an energy storage device of a vehicle according to the present disclosure. In the flowchart, optional steps are illustrated by dashed lines.

The method comprises a step S101 of determining a desired duration $t_{opt}$ of charging the energy storage device to a target state of charge so as to minimize energy loss in case the energy storage device is charged using a constant charging current during a charging operation.

The method thereafter comprises a step S102 of determining whether the determined desired duration $t_{opt}$ of charging is equal to or longer than a predetermined minimum time threshold $t_{th}$. If the determined desired duration $t_{opt}$ of charging is equal to or longer than a predetermined minimum time threshold $t_{th}$, the method proceeds to step S103. Step S103 of the method comprises determining a first charging current $I_{opt}$ needed for reaching the target state of charge if charging for a period of time corresponding to the determined desired duration $t_{opt}$. However, if the determined desired duration $t_{opt}$ of charging is shorter than the predetermined minimum time threshold $t_{th}$, the method may proceed to a step S111, as will be described below.

After step S103, the method proceeds to a step S104 of determining whether the determined first charging current $I_{opt}$ is equal to or below a predetermined maximum charging current limit $I_{max}$. If the determined first charging current $I_{opt}$ is equal to or below a predetermined maximum charging current limit $I_{max}$, the method proceeds to a step S105. Step S105 comprises selecting the determined first charging current $I_{opt}$ and the determined desired duration $t_{opt}$ of charging as parameters for the charging operation of the energy storage device. In other words, step S105 comprises setting the determined desired duration $t_{opt}$ as the selected duration $t_{charge}$ of charging for the charging operation and the determined first charging current $I_{opt}$ as selected charging current $I_{charge}$ for the charging operation.

However, if it is determined in step S104 that the determined first charging current $I_{opt}$ is greater than the predetermined maximum charging current limit $I_{max}$, the method may proceed to a step S121 after step S104. The optional step S121 comprises determining a second duration $t_{rev}$ of charging the energy storage device to the target state of charge so as to minimize energy loss. Said second duration of charging is determined for a case where the energy storage device is charged using a constant charging current corresponding to the predetermined maximum charging current limit $I_{max}$. In other words, step S121 may be described as determining an adjusted duration of charging the energy storage device based on charging using a constant current corresponding to the predetermined maximum charging current limit. After step S121, the method proceeds to a step S122 comprising selecting a charging current corresponding to the predetermined maximum charging current limit $I_{max}$ and the determined second duration $t_{rev}$ of charging as parameters (i.e. $t_{charge}$, $I_{charge}$) for the charging procedure of the energy storage device.

As mentioned above, if it is determined in step S102 that the determined desired duration $t_{opt}$ of charging is shorter than the predetermined minimum time threshold $t_{th}$, the method may proceed to a step S111. Step S111 comprises determining a second charging current $I_2$ needed for reaching the target state of charge if charging for a period of time corresponding to the predetermined minimum time threshold $t_{th}$ and using a constant charging current during the charging operation. After step S111, the method proceeds to a step S112 comprising determining whether the determined second

charging current $I_2$ is equal to or below the predetermined maximum charging current limit $I_{max}$. If the determined second charging current $I_2$ is equal to or below the predetermined maximum charging current limit $I_{max}$, the method may proceed to a step S113. Step S113 comprises selecting the determined second charging current $I_2$ and the predetermined minimum time threshold $t_{th}$ as parameters $t_{charge}$, $I_{charge}$ for the charging operation of the energy storage device.

In case it would be found that the determined second charging current $I_2$ is greater than the predetermined maximum charging current limit $I_{max}$, the herein described method for controlling charging of an energy storage device may be terminated and another strategy for charging of the energy storage device selected, for example a conventional method of charging the energy storage device as much as possible during the available time of charging.

The method may further comprise a step S106 of determining a point in time $t_{start}$ at which charging needs to be initiated to reach the target state of charge at a preselected point in time $t_{complete}$ based on the selected parameters $t_{charge}$, $I_{charge}$ for the charging operation as obtained from step S105, optional step S113 or optional step S122.

The method further comprises a step S107 of charging the energy storage device using the selected parameters $t_{charge}$, $I_{charge}$ for the charging operation. The selected parameters $t_{charge}$, $I_{charge}$ for the charging operation are obtained from step S105, or if performed, one of steps S113 or S122. In case the method comprises step S106, step S107 may be initiated at the determined point in time $t_{start}$ as determined in step S106.

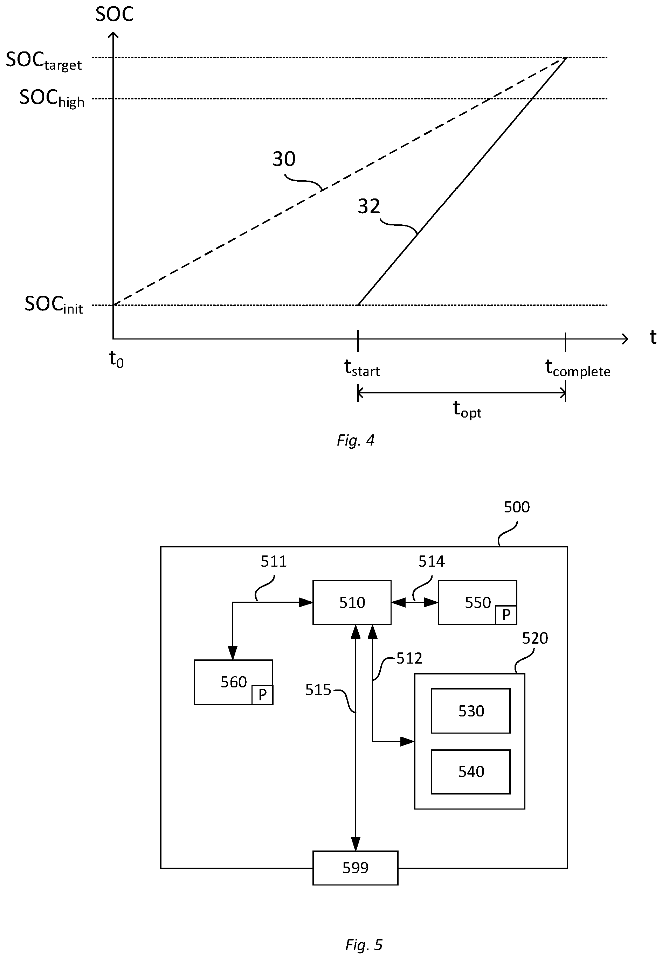

Figure 4 represents a graph schematically illustrating state of charge of an energy storage device of a vehicle over time during charging from an initial state of charge $SOC_{init}$ to a target state of charge $SOC_{target}$. In the figure, $t_0$ represents the point in time at which charging may in practice be started. This could for example be a point in time at which the vehicle has arrived at a charging station such that it may be connected to a grid for the purpose of charging the energy storage device. Moreover, $t_{complete}$ represents a preselected point in time at which the charging operation should be completed. This point in time, $t_{complete}$, could for example be selected based on a scheduled departure of the vehicle from the charging station.

A previously known strategy for charging of an energy storage device of a vehicle for minimizing the aging of the energy storage device comprises utilizing the whole available time for charging, i.e. the time from $t_0$ to $t_{complete}$, and adapting the charging current accordingly. This may lead to a relatively low constant charging current with associated relatively slow increase in state of charge, and is in the figure illustrated by the dashed line 30. Such a charging strategy may however typically be associated with unnecessary energy losses.

The method according to the present disclosure however seeks to reduce energy losses during charging as described above, and comprises determining a desired duration $t_{opt}$ of charging the energy storage device so as to minimize energy loss during the charging operation. The charging current to be used during the charging operation is thereafter determined based on the determined desired duration $t_{opt}$ of charging. Said desired duration $t_{opt}$ of charging may often be shorter that the available time for charging, as shown in the figure, and in such situations, the herein described method may be utilized. The increase in state of charge during charging in accordance with the herein described method is illustrated in the figure by the solid line 32.

When the desired duration $t_{opt}$ of charging has been determined according to the herein described method, it is also possible to determine the point in time $t_{start}$ when the charging operation needs to be initiated in order to reach the target state of charge at the preselected point in time $t_{complete}$. As can be seen from the figure, initiating the charging at $t_{start}$ leads to a shorter period of time during which the energy storage device has a state of charge above a limit $SOC_{high}$, at which there is an increased risk of aging of the energy storage device, compared to the previously known strategy illustrated by the dashed line 30. Thus, the present method may also lead to a less aging of the energy storage device due to a shorter period of time during which the energy storage device has a high state of charge.

Figure 5 schematically illustrates an exemplifying embodiment of a device 500. The control device 100 described above may for example comprise the device 500, consist of the device 500, or be comprised in the device 500.

The device 500 comprises a non-volatile memory 520, a data processing unit 510 and a read/write memory 550. The non-volatile memory 520 has a first memory element 530 in which a computer program, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

There is provided a computer program P that comprises instructions for controlling charging of an energy storage device of a vehicle. The computer program comprises instructions for determining a desired duration of charging the energy storage device to a target state of charge so as to minimize energy loss in case the energy storage device is charged using a constant charging current during a charging operation. The computer program further comprises instructions for, when the desired duration of charging is equal to or longer than a predetermined minimum time threshold, determining a first charging current needed for reaching the target state of charge if charging for a period of time corresponding to the determined desired duration. Moreover, the computer program comprises instructions for, when the determined first charging current is equal to or below a predetermined maximum charging current limit, selecting the determined first charging current and the determined desired duration of charging as parameters for the charging operation of the energy storage device. The computer program further comprises instructions for charging the energy storage device using the selected parameters for the charging operation.

The program P may be stored in an executable form or in a compressed form in a memory 560 and/or in a read/write memory 550.

The data processing unit 510 may perform one or more functions, i.e. the data processing unit 510 may effect a certain part of the program P stored in the memory 560 or a certain part of the program P stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicate with the data processing unit 510 via a data bus 514. The communication between the constituent components may be implemented by a communication link. A communication link may be a physical connection such as an optoelectronic communication line, or a non-physical connection such as a wireless connection, e.g. a radio link or microwave link.

When data are received on the data port 599, they may be stored temporarily in the second memory element 540. When input data received have been temporarily stored, the data processing unit 510 is prepared to effect code execution as described above.

Parts of the methods herein described may be affected by the device 500 by means of the data processing unit 510 which runs the program stored in the memory 560 or the read/write memory 550. When the device 500 runs the program, methods herein described are executed.

**Claims**

1. A method, performed by a control device (100), for controlling charging of an energy storage device (4) of a vehicle (1), the method comprising the following steps:

   determining (S101) a desired duration ($t_{opt}$) of charging the energy storage device (4) to a target state of charge so as to minimize energy loss in case the energy storage device (4) is charged using a constant charging current during a charging operation,
   when the determined desired duration ($t_{opt}$) of charging is equal to or longer than a predetermined minimum time threshold ($t_{th}$), determining (S103) a first charging current ($I_{opt}$) needed for reaching the target state of charge if charging for a period of time corresponding to the determined desired duration ($t_{opt}$),
   when the determined first charging current ($I_{opt}$) is equal to or below a predetermined maximum charging current limit ($I_{max}$), selecting (S105) the determined first charging current ($I_{opt}$) and the determined desired duration ($t_{opt}$) of charging as parameters for the charging operation of the energy storage device, and
   charging (S107) the energy storage device (4) using the selected parameters for the charging operation,
   **characterized in that** the step of determining (S101) a desired duration ($t_{opt}$) of charging the energy storage device (4) so as to minimize energy loss comprises calculating the desired duration of charging according to the equation:

   $$t_{opt} = \frac{\Delta SOC * C + E_{cond}}{U} * \sqrt{\frac{R}{P_{idle}}}$$

   wherein
   $t_{opt}$ represents the desired duration of charging of the energy storage device (4) so as to minimize energy loss,
   $\Delta SOC$ represents the difference in state of charge between target state of charge and a current state of charge of the energy storage device (4) before charging,
   $C$ represents the capacity of the energy storage device (4),
   $E_{cond}$ represents estimated or predetermined total energy required for conditioning of the energy storage device (4) and the interior of the vehicle (1),
   $U$ represents nominal voltage of the energy storage device (4),
   $R$ represents electrical resistance of the energy storage device (4) measured at the charging port of the energy storage device (4), and
   $P_{idle}$ represents estimated or predetermined constant energy losses during the charging operation.

2. The method according to claim 1, wherein the step of determining (S101) the desired duration of charging is made under the assumption that the voltage of the energy storage device (4) corresponds to the nominal voltage of the energy storage device (4) irrespectively of the state of charge during the charging to be performed.

3. The method according to any one of claims 1 or 2, further comprising a step of

determining (S106) a time ($t_{start}$) at which charging needs to be initiated to reach the target state of charge at a preselected point in time ($t_{complete}$) based on the selected parameters for the charging operation, and
initiating the step of charging (S107) the energy storage device (4) using the selected parameters at the determined time ($t_{start}$).

4. The method according to any one of the preceding claims, comprising:

when the determined desired duration ($t_{opt}$) of charging is shorter than the predetermined minimum time threshold ($t_{th}$), determining (S111) a second charging current ($I_2$) needed for reaching the target state of charge if charging for a period of time corresponding to the predetermined minimum time threshold ($t_{th}$), and
when the determined second charging current is equal to or below the predetermined maximum charging current limit ($I_{max}$), selecting (S113) the determined second charging current ($I_2$) and the predetermined minimum time threshold ($t_{th}$) as parameters for the charging operation of the energy storage device (4).

5. The method according to any one of the preceding claims, comprising:

when the determined first charging current ($I_{opt}$) is greater than the predetermined maximum charging current limit ($I_{max}$), determining (S121) a second duration ($t_{rev}$) of charging the energy storage device (4) to the target state of charge so as to minimize energy loss in case the energy storage device (4) is charged using a constant charging current corresponding to the predetermined maximum charging current limit ($I_{max}$), and
selecting (S122) a charging current corresponding to the predetermined maximum charging current limit ($I_{max}$) and the determined second duration ($t_{rev}$) of charging as parameters for the charging procedure of the energy storage device (4).

6. A computer program comprising instructions which, when executed by a control device (100), cause the control device (100) to carry out the method according to any one of the preceding claims.

7. A computer-readable medium comprising instructions which, when executed by a control device (100), cause the control device (100) to carry out the method according to any one of claims 1 to 6.

8. A control device (100) configured to control charging of an energy storage device (4) of a vehicle (1), wherein the control device (100) is configured to:

determine a desired duration ($t_{opt}$) of charging the energy storage device (4) to a target state of charge so as to minimize energy loss in case the energy storage device (4) is charged using a constant charging current during a charging operation,
when the determined desired duration ($t_{opt}$) of charging is equal to or longer than a predetermined minimum time threshold ($t_{th}$), determine a first charging current ($I_{opt}$) needed for reaching the target state of charge if charging for a period of time corresponding to the determined desired duration ($t_{opt}$),
when the determined first charging current ($I_{opt}$) is equal to or below a predetermined maximum charging current limit ($I_{max}$), select the determined first charging current ($I_{opt}$) and the determined desired duration ($t_{opt}$) of charging as parameters for the charging operation of the energy storage device (4), and
charge the energy storage device (4) using the selected parameters for the charging operation,
**characterized in that** the control device (100) is configured to determine the desired duration ($t_{opt}$) of charging the energy storage device (4) so as to minimize energy loss according to the equation:

$$t_{opt} = \frac{\Delta SOC * C + E_{cond}}{U} * \sqrt{\frac{R}{P_{idle}}}$$

wherein
$t_{opt}$ represents the desired duration of charging of the energy storage device (4) so as to minimize energy loss,

$\Delta SOC$ represents the difference in state of charge between target state of charge and a current state of charge of the energy storage device (4) before charging,

$C$ represents the capacity of the energy storage device (4),

$E_{cond}$ represents estimated or predetermined total energy required for conditioning of the energy storage device (4) and the interior of the vehicle (1),

$U$ represents nominal voltage of the energy storage device (4),

$R$ represents electrical resistance of the energy storage device (4) measured at the charging port of the energy storage device (4), and

$P_{idle}$ represents estimated or predetermined constant energy losses during the charging operation.

9. The control device (100) according to claim 8, further configured to:

determine a time ($t_{start}$) at which charging needs to be initiated to reach the target state of charge at a preselected point in time ($t_{complete}$) based on the selected parameters for the charging operation, and

initiate the step of charging the energy storage device (4) using the selected parameters at the determined time ($t_{start}$).

10. The control device (100) according to any one of claims 8 or 9, further configured to:

when the determined desired duration ($t_{opt}$) of charging is shorter than the predetermined minimum time threshold ($t_{th}$), determine a second charging current ($I_2$) needed for reaching the target state of charge if charging for a period of time corresponding to the predetermined minimum time threshold ($t_{th}$), and

when the determined second charging current ($I_2$) is equal to or below the predetermined maximum charging current limit ($I_{max}$), select the determined second charging current ($I_2$) and the predetermined minimum time threshold ($t_{th}$) as parameters for the charging operation of the energy storage device (4).

11. The control device (100) according to any one of claims 8 to 10, further configured to:

when the determined first charging current ($I_{opt}$) is greater than the predetermined maximum charging current limit ($I_{max}$), determine a second duration ($t_{rev}$) of charging the energy storage device (4) to the target state of charge so as to minimize energy loss in case the energy storage device (4) is charged using a constant charging current corresponding to the predetermined maximum charging current limit ($I_{max}$), and

select a charging current corresponding to the predetermined maximum charging current limit ($I_{max}$) and the determined second duration ($t_{rev}$) of charging as parameters for the charging procedure of the energy storage device.

12. The control device (100) according to any one of claims 8 to 11, wherein the control device (100) is further configured to determine a difference in state of charge between the target state of charge and a current state of charge of the energy storage device (4) before charging.

13. A vehicle (1) comprising the control device (100) according to any one of claims 8 to 12.

**Patentansprüche**

1. Verfahren, das von einer Steuervorrichtung (100) ausgeführt wird, um das Laden einer Energiespeichervorrichtung (4) eines Fahrzeugs (1) zu steuern, wobei das Verfahren die folgenden Schritte umfasst:

Bestimmen (S101) einer gewünschten Dauer ($t_{opt}$) des Ladens der Energiespeichervorrichtung (4) bis zu einem Soll-Ladezustand, um einen Energieverlust zu minimieren, falls die Energiespeichervorrichtung (4) während eines Ladevorgangs mit einem konstanten Ladestrom geladen wird,

Bestimmen (S103) eines ersten Ladestroms ($I_{opt}$), der zum Erreichen des Soll-Ladezustands erforderlich ist, falls für einen Zeitraum geladen wird, der der bestimmten gewünschten Dauer ($t_{opt}$) entspricht, wenn die bestimmte gewünschte Dauer ($t_{opt}$) des Ladens gleich oder länger ist als ein vorbestimmter Zeit-Mindestschwellenwert ($t_{th}$),

Auswählen (S105) des bestimmten ersten Ladestroms ($I_{opt}$) und der bestimmten gewünschten Dauer ($t_{opt}$) des Ladens als Parameter für den Ladevorgang der Energiespeichervorrichtung, wenn der bestimmte erste Ladestrom ($I_{opt}$) gleich oder niedriger ist als ein vorbestimmter Ladestrom-Höchstgrenzwert ($I_{max}$), und

Laden (S107) der Energiespeichervorrichtung (4) unter Verwendung der ausgewählten Parameter für den Ladevorgang,

**dadurch gekennzeichnet, dass** der Schritt des Bestimmens (S101) einer gewünschten Dauer ($t_{opt}$) des Ladens der Energiespeichervorrichtung (4), um einen Energieverlust zu minimieren, das Berechnen der gewünschten Dauer des Ladens nach folgender Gleichung umfasst:

$$t_{opt} = \frac{\Delta SOC * C + E_{cond}}{U} * \sqrt{\frac{R}{P_{idle}}}$$

wobei

$t_{opt}$ für die gewünschte Dauer des Ladens der Energiespeichervorrichtung (4) steht, um einen Energieverlust zu minimieren,

$\Delta SOC$ für die Differenz des Ladezustands zwischen einem Soll-Ladezustand und einem Ist-Ladezustand der Energiespeichervorrichtung (4) vor dem Laden steht,

$C$ für die Kapazität der Energiespeichervorrichtung (4) steht,

$E_{cond}$ für die geschätzte oder vorbestimmte Gesamtenergie steht, die benötigt wird, um die Energiespeichervorrichtung (4) und den Innenraum des Fahrzeugs (1) zu konditionieren,

$U$ für die Nennspannung der Energiespeichervorrichtung (4) steht,

$R$ für den elektrischen Widerstand der Energiespeichervorrichtung (4) steht, der an dem Ladeanschluss der Energiespeichervorrichtung (4) gemessen wird, und

$P_{idle}$ für geschätzte oder vorbestimmte konstante Energieverluste während des Ladevorgangs steht.

2. Verfahren nach Anspruch 1, wobei der Schritt des Bestimmens (S101) der gewünschten Dauer des Ladens unter der Annahme erfolgt, dass die Spannung der Energiespeichervorrichtung (4) unabhängig von dem Ladezustand während des durchzuführenden Ladens der Nennspannung der Energiespeichervorrichtung (4) entspricht.

3. Verfahren nach Anspruch 1 oder 2, das ferner folgenden Schritt umfasst:

   Bestimmen (S106) eines Zeitpunkts ($t_{start}$), zu dem das Laden einzuleiten ist, um den Soll-Ladezustand zu einem vorgewählten Zeitpunkt ($t_{complete}$) zu erreichen, anhand der ausgewählten Parameter für den Ladevorgang und Einleiten des Schrittes des Ladens (S107) der Energiespeichervorrichtung (4) unter Verwendung der ausgewählten Parameter zu dem bestimmten Zeitpunkt ($t_{start}$).

4. Verfahren nach einem der vorangehenden Ansprüche, das umfasst:

   Bestimmen (S111) eines zweiten Ladestroms ($I_2$), der zum Erreichen des Soll-Ladezustands erforderlich ist, falls für einen Zeitraum geladen wird, der dem vorbestimmten Zeit-Mindestschwellenwert ($t_{th}$) entspricht, wenn die bestimmte gewünschte Dauer ($t_{opt}$) des Ladens kürzer ist als der vorbestimmte Zeit-Mindestschwellenwert ($t_{th}$), und

   Auswählen (S113) des bestimmten zweiten Ladestroms ($I_2$) und des vorbestimmten Zeit-Mindestschwellenwerts ($t_{th}$) als Parameter für den Ladevorgang der Energiespeichervorrichtung (4), wenn der bestimmte zweite Ladestrom gleich oder niedriger ist als der vorbestimmte Ladestrom-Höchstgrenzwert ($I_{max}$).

5. Verfahren nach einem der vorangehenden Ansprüche, das umfasst:

   Bestimmen (S121) einer zweiten Dauer ($t_{rev}$) des Ladens der Energiespeichervorrichtung (4) bis zu einem Soll-Ladezustand, um einen Energieverlust zu minimieren, falls die Energiespeichervorrichtung (4) mit einem konstanten Ladestrom geladen wird, der dem vorbestimmten Ladestrom-Höchstgrenzwert ($I_{max}$) entspricht, wenn der bestimmte erste Ladestrom ($I_{opt}$) höher ist als der vorbestimmte Ladestrom-Höchstgrenzwert ($I_{max}$), und

   Auswählen (S122) eines Ladestroms, der dem vorbestimmten Ladestrom-Höchstgrenzwert ($I_{max}$) entspricht, und der bestimmten zweiten Dauer ($t_{rev}$) des Ladens als Parameter für den Ladevorgang der Energiespeichervorrichtung (4).

6. Computerprogramm mit Befehlen, die, wenn sie von einer Steuervorrichtung (100) ausgeführt werden, die Steuervorrichtung (100) dazu veranlassen, das Verfahren nach einem der vorangehenden Ansprüche auszuführen.

**7.** Computerlesbares Medium mit Befehlen, die, wenn sie von einer Steuervorrichtung (100) ausgeführt werden, die Steuervorrichtung (100) dazu veranlassen, das Verfahren nach einem der Ansprüche 1 bis 6 auszuführen.

**8.** Steuervorrichtung (100), die zum Laden einer Energiespeichervorrichtung (4) eines Fahrzeugs (1) eingerichtet ist, wobei die Steuervorrichtung (100) eingerichtet ist zum:

Bestimmen einer gewünschten Dauer ($t_{opt}$) des Ladens der Energiespeichervorrichtung (4) bis zu einem Soll-Ladezustand, um einen Energieverlust zu minimieren, falls die Energiespeichervorrichtung (4) während eines Ladevorgangs mit einem konstanten Ladestrom geladen wird,

Bestimmen eines ersten Ladestroms ($I_{opt}$), der zum Erreichen des Soll-Ladezustands erforderlich ist, falls für einen Zeitraum geladen wird, der der bestimmten gewünschten Dauer ($t_{opt}$) entspricht, wenn die bestimmte gewünschte Dauer ($t_{opt}$) des Ladens gleich oder länger ist als ein vorbestimmter Zeit-Mindestschwellenwert ($t_{th}$),

Auswählen des bestimmten ersten Ladestroms ($I_{opt}$) und der bestimmten gewünschten Dauer ($t_{opt}$) des Ladens als Parameter für den Ladevorgang der Energiespeichervorrichtung (4), wenn der bestimmte erste Ladestrom ($I_{opt}$) gleich oder niedriger ist als ein vorbestimmter Ladestrom-Höchstgrenzwert ($I_{max}$), und

Laden der Energiespeichervorrichtung (4) unter Verwendung der ausgewählten Parameter für den Ladevorgang,

**dadurch gekennzeichnet, dass** die Steuervorrichtung (100) dazu eingerichtet ist, die gewünschte Dauer ($t_{opt}$) des Ladens der Energiespeichervorrichtung (4) nach folgender Gleichung zu bestimmen, um einen Energieverlust zu minimieren:

$$t_{opt} = \frac{\Delta SOC * C + E_{cond}}{U} * \sqrt{\frac{R}{P_{idle}}}$$

wobei

$t_{opt}$ für die gewünschte Dauer des Ladens der Energiespeichervorrichtung (4) steht, um einen Energieverlust zu minimieren,

$\Delta SOC$ für die Differenz des Ladezustands zwischen einem Soll-Ladezustand und einem Ist-Ladezustand der Energiespeichervorrichtung (4) vor dem Laden steht,

$C$ für die Kapazität der Energiespeichervorrichtung (4) steht,

$E_{cond}$ für die geschätzte oder vorbestimmte Gesamtenergie steht, die benötigt wird, um die Energiespeichervorrichtung (4) und den Innenraum des Fahrzeugs (1) zu konditionieren,

$U$ für die Nennspannung der Energiespeichervorrichtung (4) steht,

$R$ für den elektrischen Widerstand der Energiespeichervorrichtung (4) steht, der an dem Ladeanschluss der Energiespeichervorrichtung (4) gemessen wird, und

$P_{idle}$ für geschätzte oder vorbestimmte konstante Energieverluste während des Ladevorgangs steht.

**9.** Steuervorrichtung (100) nach Anspruch 8, die ferner eingerichtet ist zum:

Bestimmen eines Zeitpunkts ($t_{start}$), zu dem das Laden einzuleiten ist, um den Soll-Ladezustand zu einem vorgewählten Zeitpunkt ($t_{complete}$) zu erreichen, anhand der ausgewählten Parameter für den Ladevorgang und Einleiten des Schrittes des Ladens der Energiespeichervorrichtung (4) unter Verwendung der ausgewählten Parameter zu dem bestimmten Zeitpunkt ($t_{start}$).

**10.** Steuervorrichtung (100) nach Anspruch 8 oder 9, die ferner eingerichtet ist zum:

Bestimmen eines zweiten Ladestroms ($I_2$), der zum Erreichen des Soll-Ladezustands erforderlich ist, falls für einen Zeitraum geladen wird, der dem vorbestimmten Zeit-Mindestschwellenwert ($t_{th}$) entspricht, wenn die bestimmte gewünschte Dauer ($t_{opt}$) des Ladens kürzer ist als der vorbestimmte Zeit-Mindestschwellenwert ($t_{th}$), und

Auswählen des bestimmten zweiten Ladestroms ($I_2$) und des vorbestimmten Zeit-Mindestschwellenwerts ($t_{th}$) als Parameter für den Ladevorgang der Energiespeichervorrichtung (4), wenn der bestimmte zweite Ladestrom ($I_2$) gleich oder niedriger ist als der vorbestimmte Ladestrom-Höchstgrenzwert ($I_{max}$).

**11.** Steuervorrichtung (100) nach einem der Ansprüche 8 bis 10, die ferner eingerichtet ist zum:

Bestimmen einer zweiten Dauer ($t_{rev}$) des Ladens der Energiespeichervorrichtung (4) bis zu einem Soll-Ladezustand, um einen Energieverlust zu minimieren, falls die Energiespeichervorrichtung (4) mit einem konstanten Ladestrom geladen wird, der dem vorbestimmten Ladestrom-Höchstgrenzwert ($I_{max}$) entspricht, wenn der bestimmte erste Ladestrom ($I_{opt}$) höher ist als der vorbestimmte Ladestrom-Höchstgrenzwert ($I_{max}$), und Auswählen eines Ladestroms, der dem vorbestimmten Ladestrom-Höchstgrenzwert ($I_{max}$) entspricht, und der bestimmten zweiten Dauer ($t_{rev}$) des Ladens als Parameter für den Ladevorgang der Energiespeichervorrichtung.

12. Steuervorrichtung (100) nach einem der Ansprüche 8 bis 11, wobei die Steuervorrichtung (100) ferner dazu eingerichtet ist, eine Differenz des Ladezustands zwischen dem Soll-Ladezustand und einem Ist-Ladezustand der Energiespeichervorrichtung (4) vor dem Laden zu bestimmen.

13. Fahrzeug (1), das die Steuervorrichtung (100) nach einem der Ansprüche 8 bis 12 umfasst.

**Revendications**

1. Procédé, réalisé par un dispositif de commande (100), pour commander la charge d'un dispositif de stockage d'énergie (4) d'un véhicule (1), le procédé comprenant les étapes suivantes :

la détermination (S101) d'une durée souhaitée ($t_{opt}$) de charge du dispositif de stockage d'énergie (4) jusqu'à un état de charge cible de manière à réduire au minimum les pertes d'énergie dans le cas où le dispositif de stockage d'énergie (4) est chargé en utilisant un courant de charge constant pendant une opération de charge,
lorsque la durée souhaitée ($t_{opt}$) déterminée de charge est égale ou supérieure à un temps seuil minimal ($t_{th}$) prédéterminé, la détermination (S103) d'un premier courant de charge ($I_{opt}$) nécessaire pour atteindre l'état de charge cible si la charge a lieu pendant une période de temps correspondant à la durée souhaitée ($t_{opt}$) déterminée,
lorsque le premier courant de charge ($I_{opt}$) déterminé est égal ou inférieur à une limite de courant de charge maximale ($I_{max}$) prédéterminée, la sélection (S105) du premier courant de charge ($I_{opt}$) déterminé et de la durée souhaitée ($t_{opt}$) déterminée de charge comme paramètres pour l'opération de charge du dispositif de stockage d'énergie, et
la charge (S107) du dispositif de stockage d'énergie (4) en utilisant les paramètres sélectionnés pour l'opération de charge,
**caractérisé en ce que** l'étape de détermination (S101), d'une durée souhaitée ($t_{opt}$) de charge du dispositif de stockage d'énergie (4) de manière à réduire au minimum les pertes d'énergie, comprend le calcul de la durée souhaitée de charge selon l'équation :

$$t_{opt} = \frac{\Delta SOC * C + E_{cond}}{U} * \sqrt{\frac{R}{P_{idle}}}$$

dans laquelle
$t_{opt}$ représente la durée souhaitée de charge du dispositif de stockage d'énergie (4) de manière à réduire au minimum les pertes d'énergie,
$\Delta SOC$ représente la différence d'état de charge entre l'état de charge cible et un état de charge actuel du dispositif de stockage d'énergie (4) avant la charge,
$C$ représente la capacité du dispositif de stockage d'énergie (4),
$E_{cond}$ représente l'énergie totale estimée ou prédéterminée requise pour le conditionnement du dispositif de stockage d'énergie (4) et de l'intérieur du véhicule (1),
$U$ représente la tension nominale du dispositif de stockage d'énergie (4),
$R$ représente la résistance électrique du dispositif de stockage d'énergie (4) mesurée au niveau du port de charge du dispositif de stockage d'énergie (4), et
$P_{idle}$ représente des pertes d'énergie constantes estimées ou prédéterminées pendant l'opération de charge.

2. Procédé selon la revendication 1, dans lequel l'étape de détermination (S101) de la durée de charge souhaitée est effectuée en supposant que la tension du dispositif de stockage d'énergie (4) correspond à la tension nominale du dispositif de stockage d'énergie (4) indépendamment de l'état de charge pendant la charge à réaliser.

**3.** Procédé selon l'une quelconque des revendications 1 ou 2, comprenant en outre une étape de

détermination (S106) d'un temps $(t_{start})$ auquel la charge doit être lancée pour atteindre l'état de charge cible à un point temporel $(t_{complete})$ présélectionné sur la base des paramètres sélectionnés pour l'opération de charge, et le lancement de l'étape de charge (S107) du dispositif de stockage d'énergie (4) en utilisant les paramètres sélectionnés au temps $(t_{start})$ déterminé.

**4.** Procédé selon l'une quelconque des revendications précédentes, comprenant :

lorsque la durée souhaitée $(t_{opt})$ déterminée de charge est plus courte que le temps seuil minimal $(t_{th})$ prédéterminé, la détermination (S111) d'un deuxième courant de charge $(I_2)$ nécessaire pour atteindre l'état de charge cible, en cas de charge pendant une période de temps correspondant au temps seuil minimal prédéterminé $(t_{th})$, et
lorsque le deuxième courant de charge déterminé est égal ou inférieur à la limite de courant de charge maximale $(I_{max})$ prédéterminée, la sélection (S113) du deuxième courant de charge $(I_2)$ déterminé et du temps seuil minimal $(t_{th})$ prédéterminé en tant que paramètres pour l'opération de charge du dispositif de stockage d'énergie (4).

**5.** Procédé selon l'une quelconque des revendications précédentes, comprenant :

lorsque le premier courant de charge $(I_{opt})$ déterminé est supérieur à la limite de courant de charge maximale $(I_{max})$ prédéterminée, la détermination (S121) d'une deuxième durée $(t_{rev})$ de charge du dispositif de stockage d'énergie (4) jusqu'à l'état de charge cible de manière à réduire au minimum les pertes d'énergie dans le cas où le dispositif de stockage d'énergie (4) est chargé en utilisant un courant de charge constant correspondant à la limite de courant de charge maximale $(I_{max})$ prédéterminée, et
la sélection (S122) d'un courant de charge correspondant à la limite de courant de charge maximale $(I_{max})$ prédéterminée et à la deuxième durée de charge $(t_{rev})$ déterminée en tant que paramètres pour la procédure de charge du dispositif de stockage d'énergie (4).

**6.** Programme d'ordinateur comprenant des instructions qui, lorsqu'elles sont exécutées par un dispositif de commande (100), amènent le dispositif de commande (100) à effectuer le procédé selon l'une quelconque des revendications précédentes.

**7.** Support lisible par ordinateur comprenant des instructions qui, lorsqu'elles sont exécutées par un dispositif de commande (100), amènent le dispositif de commande (100) à effectuer le procédé selon l'une quelconque des revendications 1 à 6.

**8.** Dispositif de commande (100) configuré pour commander la charge d'un dispositif de stockage d'énergie (4) d'un véhicule (1), dans lequel le dispositif de commande (100) est configuré pour :

déterminer une durée souhaitée $(t_{opt})$ de charge du dispositif de stockage d'énergie (4) jusqu'à un état de charge cible de manière à réduire au minimum les pertes d'énergie dans le cas où le dispositif de stockage d'énergie (4) est chargé en utilisant un courant de charge constant pendant une opération de charge,
lorsque la durée souhaitée $(t_{opt})$ déterminée de charge est égale ou supérieure à un temps seuil minimal $(t_{th})$ prédéterminé, déterminer un premier courant de charge $(I_{opt})$ nécessaire pour atteindre l'état de charge cible si la charge a lieu pendant une période de temps correspondant à la durée souhaitée $(t_{opt})$ déterminée,
lorsque le premier courant de charge $(I_{opt})$ déterminé est égal ou inférieur à une limite de courant de charge maximale $(I_{max})$ prédéterminée, sélectionner le premier courant de charge $(I_{opt})$ déterminé et la durée souhaitée $(t_{opt})$ déterminée de charge comme paramètres pour l'opération de charge du dispositif de stockage d'énergie (4), et
charger le dispositif de stockage d'énergie (4) en utilisant les paramètres sélectionnés pour l'opération de charge, **caractérisé en ce que** le dispositif de commande (100) est configuré pour déterminer la durée souhaitée $(t_{opt})$ de charge du dispositif de stockage d'énergie (4) de manière à réduire au minimum les pertes d'énergie selon l'équation :

$$t_{opt} = \frac{\Delta SOC * C + E_{cond}}{U} * \sqrt{\frac{R}{P_{idle}}}$$

dans laquelle

$t_{opt}$ représente la durée souhaitée de charge du dispositif de stockage d'énergie (4) de manière à réduire au minimum les pertes d'énergie,

$\Delta SOC$ représente la différence d'état de charge entre l'état de charge cible et un état de charge actuel du dispositif de stockage d'énergie (4) avant la charge,

$C$ représente la capacité du dispositif de stockage d'énergie (4),

$E_{cond}$ représente l'énergie totale estimée ou prédéterminée requise pour le conditionnement du dispositif de stockage d'énergie (4) et de l'intérieur du véhicule (1),

$U$ représente la tension nominale du dispositif de stockage d'énergie (4),

$R$ représente la résistance électrique du dispositif de stockage d'énergie (4) mesurée au niveau du port de charge du dispositif de stockage d'énergie (4), et

$P_{idle}$ représente des pertes d'énergie constantes estimées ou prédéterminées pendant l'opération de charge.

**9.** Dispositif de commande (100) selon la revendication 8, configuré en outre pour :

déterminer un temps $(t_{start})$ auquel la charge doit être lancée pour atteindre l'état de charge cible à un point temporel $(t_{complete})$ présélectionné sur la base des paramètres sélectionnés pour l'opération de charge, et lancer l'étape de charge du dispositif de stockage d'énergie (4) en utilisant les paramètres sélectionnés au temps $(t_{start})$ déterminé.

**10.** Dispositif de commande (100) selon l'une quelconque des revendications 8 ou 9, configuré en outre pour : lorsque la durée souhaitée $(t_{opt})$ déterminée de charge est plus courte que le temps seuil minimal $(t_{th})$ prédéterminé, déterminer un deuxième courant de charge $(I_2)$ nécessaire pour atteindre l'état de charge cible, en cas de charge pendant une période de temps correspondant au temps seuil minimal prédéterminé $(t_{th})$, et

lorsque le deuxième courant de charge déterminé $(I_2)$ est égal ou inférieur à la limite de courant de charge maximale $(I_{max})$ prédéterminée, sélectionner le deuxième courant de charge $(I_2)$ déterminé et le temps seuil minimal $(t_{th})$ prédéterminé en tant que paramètres pour l'opération de charge du dispositif de stockage d'énergie (4).

**11.** Dispositif de commande (100) selon l'une quelconque des revendications 8 à 10, configuré en outre pour :

lorsque le premier courant de charge $(I_{opt})$ déterminé est supérieur à la limite de courant de charge maximale $(I_{max})$ prédéterminée, déterminer une deuxième durée $(t_{rev})$ de charge du dispositif de stockage d'énergie (4) jusqu'à l'état de charge cible de manière à réduire au minimum les pertes d'énergie dans le cas où le dispositif de stockage d'énergie (4) est chargé en utilisant un courant de charge constant correspondant à la limite de courant de charge maximale $(I_{max})$ prédéterminée, et

sélectionner un courant de charge correspondant à la limite de courant de charge maximale $(I_{max})$ prédéterminée et à la deuxième durée de charge $(t_{rev})$ déterminée en tant que paramètres pour la procédure de charge du dispositif de stockage d'énergie.

**12.** Dispositif de commande (100) selon l'une quelconque des revendications 8 à 11, dans lequel le dispositif de commande (100) est en outre configuré pour déterminer une différence d'état de charge entre l'état de charge cible et un état de charge actuel du dispositif de stockage d'énergie (4) avant la charge.

**13.** Véhicule (1) comprenant le dispositif de commande (100) selon l'une quelconque des revendications 8 à 12.

Fig. 1

Fig. 2

*Fig. 3*

*Fig. 4*

*Fig. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015326037 A1

- US 2021111446 A1

**Non-patent literature cited in the description**

- Enhancing battery pack utilization in electric vehicle fleets via SoC-preconditioning. **LAMPRECHT ALEXANDER**. 2019 22nd EUROMICRO CONFERENCE ON DIGITAL SYSTEM DESIGN (DSD). IEEE, 28 August 2019, 359-364